# EUROPEAN PATENT APPLICATION

(11) **EP 2 315 460 A1**
(43) Date of publication of application: **27.04.2011**
(21) Application number: 09814058.5
(22) Date of filing: 17.09.2009
(51) Int. Cl.: H04W 4/12

(54) **SERVICE ACTIVATION METHOD, SERVICE PROVIDING METHOD, TERMINAL EQUIPMENT AND SERVER**

(30) Priority: 22.09.2008 CN 200810211458
(71) Applicant: Huawei Device Co., Ltd., Shenzhen, Guangdong 518129 (CN)
(72) Inventor: DONG, Ting, Shenzhen Guangdong 518129 (CN); FAN, Shunan, Shenzhen Guangdong 518129 (CN); YANG, Jian, Shenzhen Guangdong 518129 (CN); WANG, Lei, Shenzhen Guangdong 518129 (CN)
(74) Representative: Pfenning, Meinig & Partner GbR
(86) International application number: PCT/CN2009/073986
(87) International publication number: WO 2010/031338

(57) **Abstract**

A method for providing a mobile advertising (MobAd) service includes: receiving a MobAd service activation request sent by a terminal, where the MobAd service activation request includes collected terminal capability information; and providing a MobAd service to the terminal according to the terminal capability information.

## Description

This application claims priority to Chinese Patent Application No. 200810211458.6, filed with the Chinese Patent Office on September 22, 2008 and entitled "SERVICE ACTIVATION METHOD, SERVICE PROVIDING METHOD, TERMINAL DEVICE, AND SERVER", which is incorporated herein by reference in its entirety.

### FIELD OF THE INVENTION

The present invention relates to the field of a mobile advertising (MobAd) technology, and in particular, to a service activation method, a service providing method, a terminal device, and a server.

### BACKGROUND OF THE INVENTION

With the development of mobile communications, a service provider (SP) may send an advertisement to a user through a mobile network. In the prior art, the advertisement is normally sent to a user terminal in the form of a short message or a multimedia message.

With the rising of service demands, the Open Mobile Architecture (OMA) proposes a new service, that is, a MobAd service. The MobAd includes a series of technologies, with which advertisements can be sent to a user mobile terminal device (for example, a smart card terminal). In addition, for an advertisement to be sent, personalized configuration and interaction can be realized according to a user, and a user service profile may be generated according to the advertisement and a relevant user service to save personalized configurations of the user.

A MobAd service system includes: an SP application (SP App), a mobile advertising engine (Ad Engine), a mobile advertising application (Ad App), a MobAd server (MS), and a content provider (CP) device. The MobAd service system uses services subscribed by existing users to "bear" the MobAd service. The SP App and the Ad Engine may be installed in an SP device or a terminal, and the integrated Ad Engine requests the advertisement from the MS.

Simple explanation is made in the following.

An SP provides a MobAd service through a MobAd module MobAd Enabler. The SP manages user profile data of the MobAd Enabler. The data is based on information such as user-related information, content-related information, personal interests, and preferences.

The SP may also send an advertisement by using an SP App (for example, a network side application, which hopes to deliver the advertisement in a streaming media service, a multimedia messaging service (MMS), an SP portal, or other services thereof) and an Ad App (a resident application in a device, for example, a game or other applications). Both of the two applications can interact with the MobAd Enabler to configure the advertisement as a part of the service (for example, requesting the advertisement and configuring metrics data). The SP App may configure an advertisement for a user. That is to say, the SP App requests and receives an advertisement from an MS, and provides the user with the advertisement in the service thereof, which is applicable to any device (including a non-MobAd adaptive device).

The SP manages MobAd Enabler advertisement original data, and the original data is used for the MobAd service. The SP improves the MobAd Enabler service by using the metrics data. The SP shares the metrics data with the CP or an advertiser. The SP configures and maintains the MobAd Enabler. The SP may play multiple roles, such as an SP and a subscription provider.

A user may consume personalized and interactive advertisement contents, modify MobAd user information thereof, insert a context and a parameter, as well as enter into or exit from a MobAd service.

The Ad App saves the advertisement, and presents the advertisement to the user. The Ad App may report communication information of the user to the MobAd Enabler. The SP App resides in the network. The App interacts with the MobAd Enabler. The SP App may embed the advertisement into contents provided for the user.

Based on the above descriptions, a service framework of the MobAd is substantially clear. By the MobAd, a user may receive required advertisement contents, and may also obtain an advertisement in an active manner. In addition, the MobAd supports personalized services provided for the user, and therefore the user may perform filtering and adding preferences thereof, so as to receive contents required by the user.

During the research and implementation of the prior art, the inventors of the present invention find the following problems. In an existing MobAd service solution, a general method is used to deliver advertisements to user-side terminals. However, in fact, different terminals usually have different processing capability, including hardware processing capability, and different installed applications. If the network side delivers the advertisements in a uniform manner, services may not be provided normally. For example, a format of a delivered video medium or picture may not comply with the terminal, or resolution thereof exceeds that of a display of the terminal.

### SUMMARY OF THE INVENTION

The present invention is directed to a service activation method, a service providing method, a terminal device, and a server, so as to provide a corresponding advertisement service according to user terminal characteristics.

An embodiment of the present invention provides a method for providing a MobAd service, where the method includes:
receiving a MobAd service activation request sent by a terminal, and the MobAd service activation request including collected terminal capability information; and
providing a MobAd service for the terminal according to the terminal capability information.

An embodiment of the present invention provides a mobile advertising (MobAd ) server, where the MobAd server includes:
a receiving unit, configured to receive a MobAd service activation request sent by a terminal, and the MobAd service activation request including collected terminal capability information; and
a MobAd providing unit, configured to provide the terminal with a MobAd service according to the terminal capability information.

An embodiment of the present invention provides a terminal device, where the terminal device includes:
a capability information collecting unit, configured to collect terminal capability information;
an activation request sending unit, configured to send a MobAd activation request to a network side service server, and the MobAd service activation request including the terminal capability information collected by the capability information collecting unit; and
an advertisement information processing unit, configured to receive advertisement information delivered by the network side service server according to the capability information, and present the advertisement information.

An embodiment of the present invention provides a method for providing a MobAd service, where the method includes:
receiving a MobAd service activation request sent by a service provider (SP) device, and the MobAd service activation request including capability information of a terminal served by the SP device; and
providing a MobAd service for the SP device according to the terminal capability information.

An embodiment of the present invention provides a method for providing a MobAd service, where the method includes:
receiving a MobAd service activation request sent by a service provider (SP) device, and the MobAd service activation request including a capability information index of a terminal served by the SP device; and
obtaining capability information of the terminal according to the capability information index of the terminal, and providing a MobAd service for the SP device according to the capability information.

In the embodiments of the present invention, a MobAd service activation request sent by a terminal is received. The MobAd service activation request includes collected terminal capability information. A MobAd service is provided for the terminal according to the terminal capability information. Because before the advertising service is provided, a user requests activation, and the terminal capability information is obtained, so that the MobAd service can be provided by delivering data according to actual capability of a user terminal, thus enabling the MobAd service to match the terminal capability. Therefore, it is guaranteed that the MobAd service fits better to the user.

### BRIEF DESCRIPTION OF THE DRAWINGS

FIG. 1 is a flow chart of a method for providing a MobAd service according to a first embodiment of the present invention;
FIG 2 is a flow chart of a MobAd service activation method according to a second embodiment of the present invention;
FIG. 3 is a flow chart of a MobAd service authentication method according to a third embodiment of the present invention;
FIG 4 is a flow chart of a MobAd service version updating method according to a fourth embodiment of the present invention;
FIG. 5 is a schematic structural view of a MobAd server according to a fifth embodiment of the present invention;
FIG 6 is a schematic structural view of a terminal device according to a sixth embodiment of the present invention;
FIG 7 is a flow chart of a method for providing a MobAd service according to a seventh embodiment of the present invention; and
FIG 8 is a flow chart of a method for providing a MobAd service according to an eighth embodiment of the present invention.

### DETAILED DESCRIPTION OF THE EMBODIMENTS

The technical solution of the present invention will be clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

A service activation method, a service providing method, a terminal device, and a server according to embodiments of the present invention are as follows. The details are described in the following respectively.

### Embodiment 1

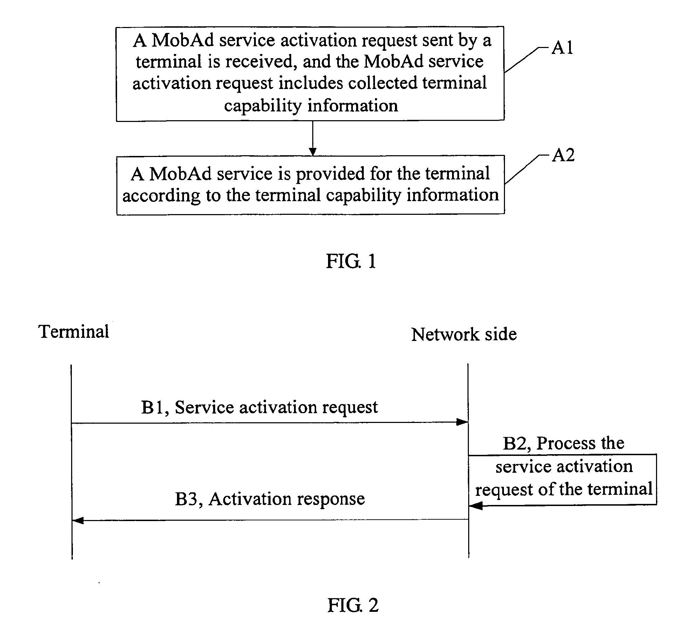

A flow chart of a method for providing a MobAd service is shown in FIG. 1, which includes the following steps.

In Step A1, a MobAd service activation request sent by a terminal is received. The MobAd service activation request includes collected terminal capability information.

In the embodiment of the present invention, the terminal capability information may be hardware processing capability, such as information of a Central processing unit (CPU) frequency and the size of a memory, and may also be information of various applications installed in the terminal and information such as supported file formats and preferences. It should be understood that, the terminal capability information according to the embodiment of the present invention includes, but not limited to, the above information.

The number of the Ad App in the terminal may be multiple, including, for example, an App1, an App2, an App3, .... By using an Ad Engine, information (including an application ID, capability, and a type) of each of the Ad Apps is collectively collected to the Ad Engine before starting a service. Specifically, the method for the collecting may be as follows. The Ad Engine searches for possible applications in the terminal, and requests the sending of a piece of application information. Alternatively, when an App is installed, the App sends information thereof to the Ad Engine automatically. Or, a user actively sends information to the Ad Engine through an Ad App. It should be understood that, the embodiment of the present invention includes, but not limited to, the above collecting method.

In the embodiment of the present invention, the MobAd service activation request sent by the terminal may be sent through a packet switched (PS) domain or a Circuit switched (CS) domain.

In the method in which the advertising activation request is sent through the CS domain, a prerequisite for starting the MobAd service is that the terminal is in a state in which the CS domain is already available. Therefore, the MobAd service may be activated by the terminal that initiates a CS domain message to a network side, which leads to content interaction of the PS domain in the following. The installation of MobAd in the Enabler on the terminal side may trigger the terminal to initiate a CS domain activation message to the network side. The message carries information necessary for the activation, such as terminal device information and version information. After receiving the information, a server performs corresponding processing, and the processing may include interaction between the server and other service servers. Finally, the server sends a confirmation message of the activation to the terminal.

In this embodiment, a session and message for the CS domain to activate the PS domain may be a short message, a multimedia message, a voice phone, or may be in other forms.

In Step A2, a MobAd service is provided for the terminal according to the terminal capability information.

In the embodiment of the present invention, a service activation complete message returned to the terminal may be sent through the PS domain or the CS domain. It should be understood that, the sending of the message through the PS domain can achieve higher security.

It should be understood that, after Step A1, the present invention may further include: returning the service activation complete message to the terminal; and using the message as a response of the server, and informing the terminal that the advertising service can be performed.

In the first embodiment of the present invention, the MobAd service activation request sent by the terminal is received. The MobAd service activation request includes the collected terminal capability information. The MobAd service is provided for the terminal according to the terminal capability information. Because before the advertising service is provided, the user requests activation, and the terminal capability information is obtained, so that the MobAd service can be provided by delivering data according to actual capability of the user terminal, thus enabling the MobAd service to match the terminal capability. Therefore, it is guaranteed that the MobAd service fits better to the user.

In the first embodiment of the present invention, the MobAd service activation request may include user information of the terminal, and the user information includes a user identifier (ID) and a device ID of the terminal.

Before Step A2, the method may further include authentication performed on the user and network access legality verification performed on the terminal, which specifically include the following steps.

### 1. User authentication:

Authentication is performed on the user using the MobAd service according to the user information. If the authentication is passed, the procedure proceeds to Step A2. Normally, the user information herein may be just the user ID. Whether a user already subscribes to the MobAd service is judged according to the user ID. If not, the service activation cannot be completed. Definitely, other user information may also be used to perform the authentication on the user using the MobAd service, and the embodiment of the present invention is not limited thereto.

### 2. Access legality verification on the terminal

The legality of the terminal accessing the network is verified. If the verification is passed, the procedure proceeds to A2. Specifically, the verification may be performed by judging whether the device ID of the terminal device is included in a preset list. If yes, it is determined that the device is legal. Specifically, many methods may be used to perform the verification. For example, verification methods using a Mobile Station international Integrated Services Digital Network number (MSISDN) or an International Mobile Subscriber Identity (IMSI) are feasible. Different methods may be used according to different networks.

In the embodiment of the present invention, the execution order of the authentication of the user and the verification of the access legality of the terminal is not fixed, and may vary in different network protocols and architectures. The present invention is not limited by the specific execution order.

In the first embodiment, the sending, by the terminal, the MobAd service activation request may be initiated by the terminal actively, and may also be initiated by the network side. Before the sending, by the terminal, the MobAd service activation request, the method may further include the following steps.

A Network side device sends a service activation message to the terminal. The service activation message is configured to trigger the terminal to send the MobAd service activation request. The service activation message is sent in a multicast/broadcast or a unicast manner.

After receiving the service activation message, the terminal may remind the user whether the MobAd service is to be activated or not. The service activation message may be sent to the terminal through the CS domain or the PS domain. It should be understood that, the sending of the message through the PS domain can achieve higher security.

In this embodiment, the MobAd service activation request may further include version information of the terminal.

Before the activating the MobAd service of the terminal, the method may further include the following steps.

Whether the version information of the terminal is the same as the version information of the network side is checked. If not, version updating is preformed on the terminal.

### Embodiment 2

A MobAd service activation method includes the following steps.

A prerequisite to this embodiment is that a terminal is already installed with a MobAd Enabler, and the network side also has a MobAd Enabler. The two MobAd Enablers may respectively represent an application and engine of the terminal side for processing a MobAd service, and an application and engine of the network side. The application and the engine may be separated and located in different network devices, and may also be integrated together.

Before the MobAd Enabler of the user terminal uses the MobAd service, activation shall be completed. A flow chart of signalling is shown in FIG 2, which includes the following steps.

In Step B1, a terminal MobAd Enabler initiates a service activation request message ActivationRequest.

The message may carry a terminal device number, device information, terminal capability information, software version information, and user preferences. For example, a format of the ActivationRequest message may be as shown in Table. 1.

**Table 1**

| Information element | Requirements | Type | Description |
|---|---|---|---|
| Device ID | Mandatory | String | The device ID is a unique number of a device, and includes version information of the Enabler of the terminal. |
| Version | Mandatory | String | The versions supported by the MobAd, and the format may be: <major version>.<minor version> For example, the current version of the MobAd Enabler is "1.0". |
| Device information | Optional | String | Besides UAProfile, the terminal device capability information and user information are included. |
| Extend-info | Optional | String | Extensive information |

In Step B2, after receiving the ActivationRequest message, the network side MobAd Enabler processes the service activation request of the terminal.

It should be understood that, the network side MobAd Enabler may process the message in the activation request in association with other services. For example, the MobAd service may use a service Presence to inquire a status of a user and information of other services used by the user according to personal information of the user. The service Presence quoted here is only an example, and other services may also be used together to activate the MobAd service for the user.

In Step B3, the network side MobAd Enabler returns an activation response message ActivationResponse to the terminal. For example, a format of the ActivationResponse message may be as shown in Table. 2.

**Table 2**

| Information element | Requirements | Type | Description |
|---|---|---|---|
| Session-ID | Mandatory | String | The session ID is an ID configured to uniquely identify the session. |
| Broadcast-Service-ID | Optional | String | A broadcast channel list is a parameter that enables a terminal device to access a broadcast channel for subsequent subscription of the user. Meanwhile, the parameter may include a CBS broadcasting parameter. The parameter is unique. |
| Session-TTL | Mandatory | Integer | A time to live (TTL) value of the session. If the value is "0", the session is invalid. |

The above messages ActivationRequest and ActivationResponse are just examples for illustration, and the parameters thereof fall within the protection scope. If other parameters are to be added into the messages, the principle remains the same, and the parameters are also transmitted through this type of messages.

After processing the terminal service activation request, the network side returns a response message to the terminal to inform the terminal service Enabler that other service processing can be performed from the moment. Transmission directions of the messages are shown in Table 3.

**Table 3**

| Message name | Requirements | Direction |
|---|---|---|
| ActivationRequest | Mandatory | Client → Server |
| ActivationResponse | Mandatory | Client ← Server |

In this embodiment, a module MobAd Enabler is required to be added on the terminal side. The module collects and saves the terminal device information, and may also upload information and send the terminal message to the network side Enabler.

A module MobAd Enabler is also required to be added on the server side. The module can process registration information reported by the terminal, and work together with other service modules to save, find, filter, and classify the user terminal information. In this embodiment, other services, including the service Presence, are examples for illustration, and are used to illustrate a function in which other services process information in association with the MobAd service.

### Embodiment 3

A MobAd service authentication method includes the following steps.

In this embodiment, a user terminal Enabler performs user authentication during activation. The authentication refers to confirmation of identity of a user and ability of the user to user a service. The authentication of the user can be performed during the activation of the terminal Enabler, and may also be performed by registration separately. The objective of the authentication of the user is to confirm the legality of the identity of the user and the legality of a user terminal accessing a service network.

A prerequisite to this embodiment is that: a terminal service enabler may still actively initiate an activation message to trigger an activation process during the activation, and the terminal is already installed with a MobAd service Enabler.

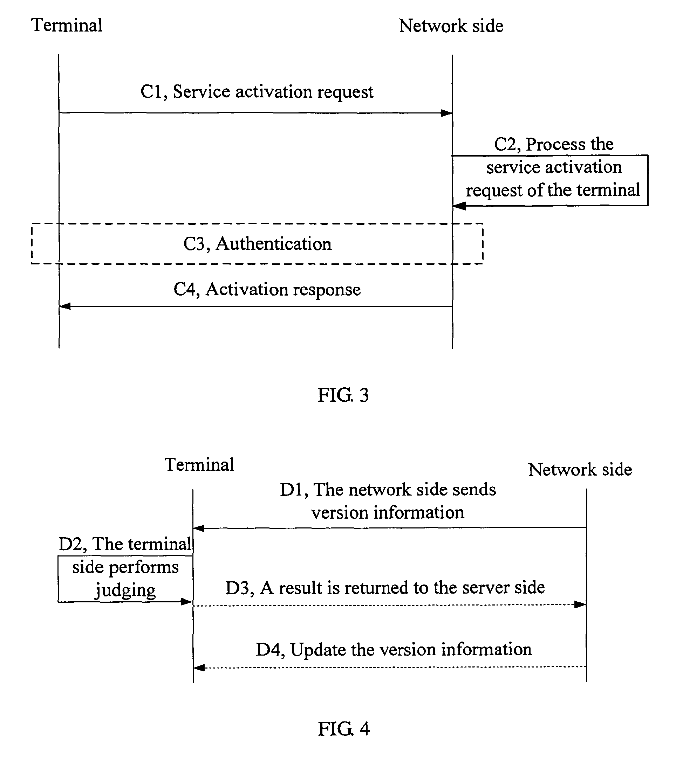

A flow chart is shown in FIG 3, and includes the following steps.

In Step C1, a terminal MobAd service enabler initiates a service activation request message ActivationRequest.

The message may carry terminal user information, device information, software version information, and user preferences.

In Step C2, after receiving the message ActivationResquest, a network side Enabler processes the activation request message.

The network side MobAd service enabler may process the message in the activation request in association with other services. For example, the MobAd may use a service Presence to inquire a status of a user and information of other services used by the user according to personal information of the user. The service Presence quoted here is only an example, and other services may also be used together to activate the MobAd service for the user. The network side may process the information at the moment or later.

The network side may process information carried in the activation message sent by the terminal upon receiving the activation message, and may also perform the processing according to an authentication result after the authentication is completed.

In Step C3, the network side performs the authentication on the terminal. Many methods can be used for the authentication: the authentication may be performed directly according to the user information in the activation request; or a server performs some setting, and sends a result to the terminal MobAd Enabler, and the authentication is performed by interaction.

In Step C4, the network side MobAd Enabler returns an ActivationResponse message to the terminal.

After processing the terminal service activation request, the network side returns a response message to the terminal to inform the terminal service Enabler that other service processing can be performed from the moment, and in this embodiment, this step follows the authentication and verification.

The forms of the activation messages ActivationResponse and ActivationRespect in this embodiment may be the same as those in the second embodiment.

### Embodiment 4

A flow chart of a MobAd service program version updating method is shown in FIG. 4, which includes the following steps.

In Step D1, after obtaining activation information, a network side extracts version information in the activation information, and compares version information thereof with the extracted version information. If the extracted version information and the version information of the network side do not match, the network side sends the version information thereof to a terminal.

In Step D2, after receiving the version information sent by the server side, a terminal side performs judging. If the received version information does not match the version information of the terminal side, the procedure proceeds to Step D3, in which the terminal side requests the program of the latest version from the server side. If the version information of the terminal side matches that of the server, no sending is performed.

In Step D3, the terminal side sends a message to the network side to request the program of a version.

In Step D4, after receiving the request information, the network side sends the program of the latest version to the terminal side.

In the embodiment of the present invention, the network side server requires a module to control and manage the version. The module saves the current version information used by the server, and may also respond to the terminal by returning the updated version information to the terminal. The terminal side may include a module that controls the version information. The module may receive terminal version information, send the terminal version information, and replace a current version of the terminal according to the received version information. Therefore, the module also has a saving function.

According to an embodiment of the present invention, a schematic interface diagram of a network side Enabler and a MobAd terminal is shown.

Detailed descriptions of management interfaces are as follows.

The management interface is an interface used by an MS to manage a terminal, system information interaction between the MS and a MobAd terminal device is performed through the management interface, and with the management interface, registration or activation of an Ad Engine can be performed. The management interface is bi-directional, and can receive and send messages from the Ad Engine and the MS.

The management interface has the following functions.
1. Activation and unregistration of an Ad Engine;
2. Registration and unregistration notice of an Ad App;
3. Upload of context information;
4. System notification messaging;
5. System request and response messaging;
6. Ad channel/content subscription and un-subscription;
7. Ad channel/content subscription state update requesting, state updating, and confirming; and
8. Ad channel/content discovering.

For each of the above functions of the management interface, corresponding messages that match the functions exist, and corresponding message senders and responding methods exist.

In the present invention, correspondences exist between the interface and the messages. Messages of a subscription and management module in the MS correspond to a subscription and management module in the Ad Engine. That is to say, through the interface, the two modules can process subscription and management data together. Accordingly, distribution and adaptation of advertisement contents correspond to receiving and storage management of the contents, so as to perform filtering, adaptation, and storage operations on the contents together.

The management interface and a data distribution and upload interface are divided according to functions, the two interfaces may be integrated into one, and the two interfaces may also be separated. In the present invention, the interface is only an example for illustration, no matter the number of the interface is larger or smaller, the functions remain consistent, thus falling in the protection scope.

In the embodiment of the present invention, device information and user information are as follows. The network side server obtains device ID information from the activation message and user information including device information and user-info. The obtained device ID can make the network side know a device number of a user. If the user uses multiple terminals, obtained information of the different devices shall be consistent. However, capability adaptation is required to be performed. By the activation of the terminal, the server may create a device management table for the user. Various devices are under the same user name, but the device IDs are different. Since the user subscribes to certain content, no matter which terminal is switched to, the service shall not change.

The server also creates a management table for the user according to the device IDs and the device information/user-info. The table records in detail personal information of the user, device information, and device numbers. If the user needs roaming, or making the attribute information thereof public, or sending the attribute information thereof to another device, the table may be sent, so that by sending the table, basic information of the user can be known by other devices.

A MobAd server processes activation information sent by the terminal, extracts device information and user information in the activation information, and sorts the information into the form of a table according to the users, as shown in Table 4.

**Table 4**

| User | Device ID | Type | User info |
|---|---|---|---|
| Zhang San/13412345678 | 123 | String | Age = 18, male ... |
| Li Si/13212345678 | 321 | String | Age = 30, female, ... |
| wangwu@xxx.com | 121.XXX.XXX.XX | Striing | Age = 24,male, ... |

The above table is only an example for illustration, other forms that include the device information and the user information may exist, and the principle remains the same.

The user attribute information (table) is sent to servers of other services. An extensive item in the message may be added with other attribute information of the user or other necessary data.

This example is mainly to illustrate that the user information and the terminal information may be extended to other services through the MobAd server. The attribute information (table) may well simplify implementation procedure of other services, thus avoiding repeated obtaining of the terminal information and the user information.

In the embodiment of the present invention, by activating, a server can know whether a service of a user is already started, and whether the user can receive corresponding service information. When the user sends the device information and the user information to the network through the activation information, the server is aware that the message is for preparing the subsequent sending of the content. Therefore, after receiving the activation information, the server starts sending information to the terminal.

Those of ordinary skill in the art should understand that all or a part of the steps of the method according to the embodiments of the present invention may be implemented by a program instructing relevant hardware. The program may be stored in a computer readable storage medium, and the storage medium may include a ROM, a RAM, a magnetic disk, and an optical disk.

### Embodiment 5

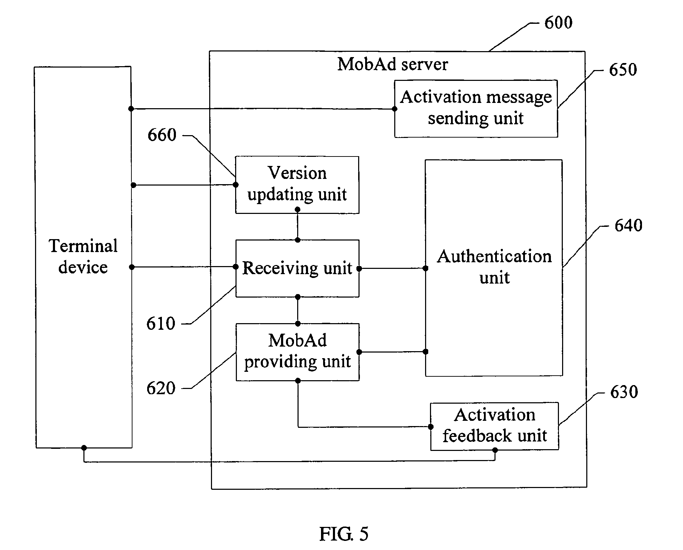

A schematic structural view of a MobAd server 600 is shown in FIG 5, which includes: a receiving unit 610 and a MobAd providing unit 620.

The receiving unit 610 is configured to receive a MobAd service activation request sent by a terminal, and the MobAd service activation request includes collected terminal capability information.

The MobAd providing unit 620 is configured to provide the terminal with MobAd service according to the terminal capability information.

In this embodiment, the MobAd server may further include an activation feedback unit 630.

The activation feedback unit 630 is configured to return a service activation complete message to the terminal after the receiving unit 610 receives the MobAd service activation request sent by the terminal.

In this embodiment, the MobAd server may further include an authentication unit 640.

The authentication unit 640 is configured to perform authentication on a user using the MobAd service according to user information of the terminal included in the MobAd service activation request received by the receiving unit, and notify an activation processing unit to activate the MobAd service if the authentication is passed.

In this embodiment, the MobAd server may further include an activation message sending unit 650.

The activation message sending unit 650 is configured to send a service activation message to the terminal. The service activation message is configured to trigger the terminal to send the MobAd service activation request.

In this embodiment, the MobAd service activation request received by the receiving unit includes version information of the terminal.

The MobAd server may further include a version updating unit 660, which is configured to check whether the version information of the terminal is the same as version information of a network side, and update the version of the terminal if the version information of the terminal is different from the version information of the network side.

### Embodiment 6

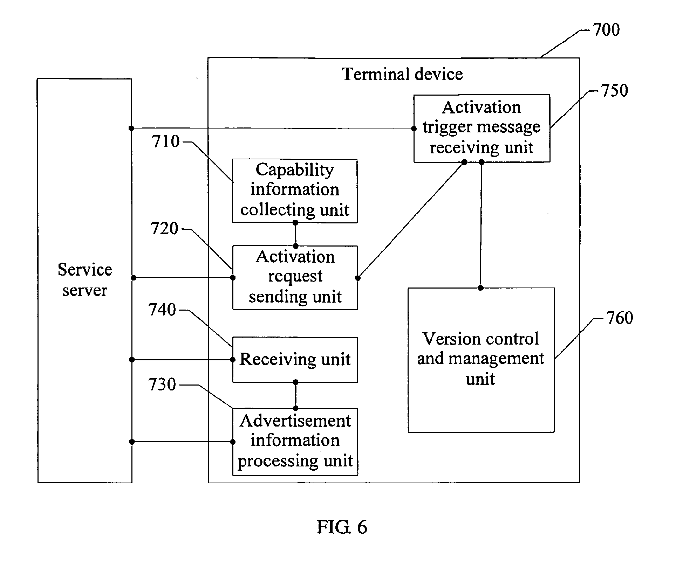

A schematic structural view of a terminal device 700 is shown in FIG. 6, which includes a capability information collecting unit 710, an activation request sending unit 720, and an advertisement information processing unit 730.

The capability information collecting unit 710 is configured to collect terminal capability information.

The activation request sending unit 720 is configured to send a MobAd service activation request to a network side service server. The MobAd service activation request includes the terminal capability information collected by the capability information collecting unit.

The advertisement information processing unit 730 is configured to receive advertisement information delivered by the network side service server according to the capability information, and present the advertisement information.

In this embodiment, the terminal device may further include a receiving unit 740.

The receiving unit 740 is configured to receive a service activation complete message returned by the network side service server. The service activation complete message may be configured to start an advertisement service receiving interface on the terminal side, so that the advertisement service information can be received.

In this embodiment, the terminal device may further include an activation trigger message receiving unit 750.

The activation trigger message receiving unit 750 is configured to receive an activation message sent by the network side service server, and notify the activation request sending unit to send the MobAd service activation request after receiving the activation message.

In this embodiment, the MobAd service activation request received by the activation trigger message receiving unit includes version information of the network side.

The terminal device may further include a version control and management unit 760, which is configured to check whether version information of the terminal is the same as the version information of the network side, and interact with the network side service server to perform version updating if the version information of the terminal is different from the version information of the network side.

### Embodiment 8

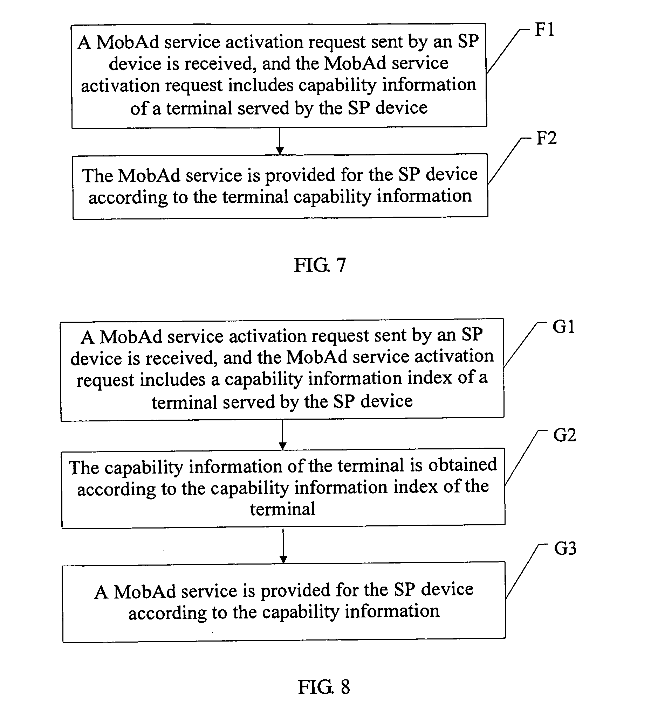

A flow chart of a method for providing a MobAd service is shown in FIG. 8, which includes the following steps.

In F1, a MobAd service activation request sent by an SP device is received. The MobAd service activation request includes capability information of a terminal served by the SP device.

In this embodiment, the SP device may represent the terminal device served by the SP device to request an advertisement from a MobAd server, and the request carries the terminal capability information. The SP device herein may be a game provider device or a server having the similar function. When serving a user, the SP device obtains the terminal capability information by using at least one of: terminal capability index information, terminal ID information, terminal service subscription information, and requests the advertisement from the MobAd server accordingly.

In Step F2, the MobAd service is provided for the SP device according to the terminal capability information.

After receiving an advertising activation request carrying the terminal capability information of the SP device, an advertisement server may perform comparison according to hardware requirements for playing the advertisement and the terminal capability information to judge whether to send the advertisement to the SP device.

In this embodiment, because before the advertising is provided, the user requests activation, and the terminal capability information is obtained, so that the MobAd service can be provided by delivering data according to actual capability of the user terminal, thus enabling the MobAd service to match the terminal capability. Therefore, it is guaranteed that the MobAd service fits better to the user.

### Embodiment 7

A flow chart of a method for providing a MobAd service s shown in FIG. 7, which includes the following steps.

In G1, a MobAd service activation request sent by an SP device is received. The MobAd service activation request includes a capability information index of a terminal served by the SP device.

The capability information index is at least one of terminal ID information, terminal service subscription information, and a terminal device type.

In Step G2, the capability information of the terminal is obtained according to the capability information index of the terminal.

In Step G3, a MobAd service is provided for the SP device according to the capability information.

In this embodiment, the SP requests and receives an advertisement, thus having the same function as that of a MobAd Enabler of the terminal. The terminal capability information index is carried in the activation request sent by the SP, so that the MobAd Enabler of a MobAd service server obtains device information related to the terminal, such as a device number, terminal capability information, and terminal user preference information. Meanwhile, the MobAd service server may also obtain advertisement information matching the terminal user according to the terminal capability information.

In the embodiment of the present invention, the MobAd service activation request received by the MobAd service server may further include SP ID information and terminal ID information, so that the MobAd service server can perform authentication on the SP or the terminal easily.

In view of the above, in the embodiments of the present invention, the service activation method, the service providing method, the terminal device, and the server are described in detail. The principle and implementation of the present invention are described herein through specific examples. The description about the embodiments of the present invention is merely provided for ease of understanding of the method and core ideas of the present invention. Persons of ordinary skill in the art can make variations and modifications to the present invention in terms of the specific implementations and application scopes according to the ideas of the present invention. Therefore, the specification shall not be construed as a limit to the present invention.

## Claims

1. A method for providing a mobile advertising (MobAd) service, comprising:
receiving a MobAd service activation request sent by a terminal, wherein the MobAd service activation request comprises collected terminal capability information; and
providing a MobAd service for the terminal according to the terminal capability information.

2. The method according to claim 1, wherein after the receiving the MobAd service activation request sent by the terminal, the method comprises returning a service activation complete message to the terminal.

3. The method according to claim 1, wherein the MobAd service activation request comprises user information of the terminal;
before the activating the MobAd service of the terminal, the method further comprises:
performing authentication on a user using the MobAd service according to the user information; and continuing providing the MobAd service for the terminal according to the terminal capability information if the authentication is passed.

4. The method according to claim 1, wherein before the activating the MobAd service of the terminal, the method further comprises:
verifying legality of the terminal accessing a network, and continuing providing the MobAd service for the terminal according to the terminal capability information if the verification is passed.

5. The method according to claim 1, wherein before the receiving the MobAd service activation request sent by the terminal, the method further comprises:
sending a service activation message to the terminal, wherein the service activation message is configured to trigger the terminal to send the MobAd service activation request, and the service activation message is sent in a multicast/broadcast or a unicast manner.

6. The method according to claim 5, wherein the service activation message is sent to the terminal through a Circuit switched (CS) domain.

7. The method according to any one of claims 1 to 6, wherein the MobAd service activation request comprises version information of the terminal;
before the activating the MobAd service of the terminal, the method further comprises:
checking whether the version information of the terminal is the same as version information of a network side, and updating the version of the terminal if the version information of the terminal is different from the version information of the network side.

8. The method according to claim 7, wherein the MobAd service activation request is sent through the CS domain, and the service activation complete message returned to the terminal is sent through the CS domain.

9. A mobile advertising (MobAd) server, comprising:
a receiving unit, configured to receive a MobAd service activation request sent by a terminal, wherein the MobAd service activation request comprises collected terminal capability information; and
a MobAd providing unit, configured to provide the terminal with MobAd service according to the terminal capability information.

10. The MobAd server according to claim 9, further comprising:
an activation feedback unit, configured to return a service activation complete message to the terminal after the receiving unit receives the MobAd service activation request sent by the terminal.

11. The MobAd server according to claim 9, further comprising:
an authentication unit, configured to perform authentication on a user using the MobAd service according to user information of the terminal comprised in the MobAd service activation request received by the receiving unit, and notify the MobAd providing unit to provide the MobAd service if the authentication is passed.

12. The MobAd server according to claim 11, further comprising an activation message sending unit, configured to send a service activation message to the terminal, wherein the service activation message is configured to trigger the terminal to send the MobAd service activation request.

13. The MobAd server according to claim 10, wherein the MobAd service activation request received by the receiving unit comprises version information of the terminal; and
the MobAd server further comprises a version updating unit, configured to check whether the version information of the terminal is the same as version information of a network side, and update the version of the terminal if the version information of the terminal is different from the version information of the network side.

14. A terminal device, comprising:
a capability information collecting unit, configured to collect terminal capability information;
an activation request sending unit, configured to send a mobile advertising (MobAd) activation request to a network side service server, wherein the MobAd service activation request comprises the terminal capability information collected by the capability information collecting unit; and
an advertisement information processing unit, configured to receive advertisement information delivered by the network side service server according to the capability information, and present the advertisement information.

15. The terminal device according to claim 14, further comprising:
a receiving unit, configured to receive a service activation complete message returned by the network side service server.

16. The terminal device according to claim 14, further comprising:
an activation trigger message receiving unit, configured to receive an activation message sent by the network side service server, and notify the activation request sending unit to send the MobAd service activation request after receiving the activation message.

17. The terminal device according to claim 16, wherein the MobAd service activation request received by the activation trigger message receiving unit comprises version information of the network side; and
the terminal device further comprises a version control and management unit, configured to check whether version information of the terminal is the same as the version information of the network side, and interact with the network side service server to perform version updating if the version information of the terminal is different from the version information of the network side.

18. A method for providing a mobile advertising (MobAd) service, comprising:
receiving a MobAd service activation request sent by a service provider (SP) device, wherein the MobAd service activation request comprises capability information of a terminal served by the SP device; and
providing a MobAd service for the SP device according to the terminal capability information.

19. The method according to claim 18, wherein the SP device obtains the terminal capability information according to at least one of: terminal identification (ID) information, terminal service subscription information, and a terminal device type.

20. A method for providing a mobile advertising (MobAd) service, comprising:
receiving a MobAd service activation request sent by a service provider (SP) device, wherein the MobAd service activation request comprises a capability information index of a terminal served by the SP device; and
obtaining capability information of the terminal according to the capability information index of the terminal, and providing a MobAd service for the SP device according to the capability information.

21. The method according to claim 20, wherein the capability information index is at least one of: terminal identification (ID) information, terminal service subscription information, and a terminal device type.
